# FASCICULE DE BREVET EUROPEEN

(11) **EP 2 531 779 B1**
(45) Date de publication et mention de la délivrance du brevet: **05.03.2014**
(21) Numéro de dépôt: 11703169.0
(22) Date de dépôt: 31.01.2011
(51) Int. Cl.: F24H 1/43, F24H 1/52, F24H 8/00, F28D 7/00, F28D 7/02, F24H 9/00

(54) **DISPOSITIF DE PRODUCTION DE FLUIDES CHAUDS COMPRENANT UN ECHANGEUR DE CHALEUR A CONDENSATION**
BRENNWERTWÄRMETAUSCHER FÜR MEHRERE FLÜSSIGKEITEN UND BRENNWERTKESSEL MIT EINEM SOLCHEN WÄRMETAUSCHER
CONDENSING HEAT EXCHANGER FOR MULTIPLE FLUIDS AND DEVICE FOR THE PRODUCTION OF HOT FLUIDS COMPRISING SUCH A HEAT EXCHANGER

(30) Priorité: 01.02.2010 FR 1050695
(43) Date de publication de la demande: 12.12.2012
(73) Titulaire: Giannoni France, 29600 Morlaix (FR)
(72) Inventeur: LE MER, Joseph, F-29252 Plouezoch (FR); GIANNONI, Rocco, I-20121 Milan (IT)
(74) Mandataire: Regimbeau
(86) Numéro de dépôt international: PCT/EP2011/051326
(87) Numéro de publication internationale: WO 2011/092332

(56) Documents cités:
- EP-A1- 0 678 186
- EP-A2- 1 281 919
- DE-U1- 8 530 184
- FR-A1- 2 846 075
- FR-A1- 2 850 451
- FR-A1- 2 854 229
- US-A1- 2007 209 606

## Description

La présente invention concerne un dispositif de production de fluides chauds, qui comprend notamment un échangeur de chaleur à condensation pour le réchauffage de plusieurs fluides et des moyens de production d'un gaz chaud, tels qu'un brûleur, en particulier à gaz ou à fioul ou des moyens d'amenée d'un gaz chaud produit préalablement par une source extérieure.

Ce dispositif est destiné notamment à équiper une chaudière à gaz pour des applications domestiques ou industrielles, par exemple en vue d'alimenter un circuit de chauffage central et/ou de fournir de l'eau à usage sanitaire.

L'échangeur de chaleur dudit dispositif est du type comprenant une enveloppe qui délimite une enceinte à l'intérieur de laquelle est logé au moins un faisceau de tube(s), comme décrit par exemple dans le document EP-B-0 678 186, auquel on pourra se reporter au besoin.

Dans le document EP-B-0 678 186 est décrit un élément échangeur de chaleur qui consiste en un tube en matériau thermiquement bon conducteur, dans lequel un fluide caloporteur, par exemple de l'eau à réchauffer, est destiné à circuler.

Ce tube est enroulé en hélice et possède une section droite aplatie et ovale dont le grand axe est sensiblement perpendiculaire à l'axe de l'hélice, et chaque spire du tube possède des faces planes qui sont écartées des faces de la spire adjacente d'un interstice de largeur constante, cette largeur étant sensiblement plus faible que l'épaisseur de ladite section droite, l'espacement entre deux spires voisines étant en outre calibré au moyen d'entretoises, lesquelles sont constituées par des bossages formés dans la paroi du tube.

Ce document décrit également des échangeurs de chaleur comportant plusieurs éléments tels que décrits ci-dessus, qui sont agencés de différentes manières dans les divers modes de réalisation exposés.

Un élément échangeur ainsi conçu est capable d'assurer un échange de chaleur très efficace entre, d'une part, des gaz très chauds, lesquels peuvent être générés directement par un brûleur monté dans l'enceinte, ou provenir d'une source extérieure, qui lèchent l'élément tubulaire, et, d'autre part, un fluide à réchauffer, tel que de l'eau, lequel circule à l'intérieur de celui-ci.

En effet, lors de son passage à travers l'interstice entre les spires, suivant une direction approximativement radiale, le flux de gaz chauds vient en contact avec une surface relativement étendue de la paroi de l'élément d'échangeur.

La figure 20 du document EP-B-0 678 186 montre ainsi un échangeur de chaleur qui comprend : un faisceau de tubes enroulés en hélice faisant office d'échangeur primaire, des moyens pour y faire circuler un seul fluide primaire, un brûleur apte à générer des gaz chauds, un disque en céramique fixé à l'extrémité de ce brûleur et à l'intérieur du faisceau de tubes de façon à compartimenter ce dernier en deux parties et un obturateur annulaire disposé à l'extérieur du faisceau de tubes.

Un tel échangeur permet, grâce aux deux chicanes formées par le disque et l'obturateur, de faire circuler les gaz chauds successivement de l'intérieur du faisceau primaire vers l'extérieur, puis en aval du disque et en amont de l'obturateur de l'extérieur vers l'intérieur, puis enfin de les faire s'échapper par la manchette d'évacuation des gaz refroidis.

Toutefois, dans le document précité, il n'est prévu de réchauffer qu'un seul fluide à l'aide d'une seule source de chaleur. Or, dans certaines applications, il peut être utile de réchauffer aux moins deux fluides, par exemple de l'eau à usage sanitaire et de l'eau pour un circuit de chauffage d'un bâtiment.

L'échangeur de chaleur à condensation, décrit dans le document FR 2 854 229, permet justement de réchauffer un fluide primaire et un fluide secondaire.

Toutefois, il est conçu pour récupérer la chaleur d'un gaz chaud additionnel provenant d'une seconde source de chaleur, par exemple de l'échappement d'un moteur. La récupération des calories présentes dans ces gaz d'échappement permet ainsi d'améliorer le rendement global de l'échangeur de chaleur.

A cet effet, il comprend une enveloppe imperméable aux gaz, à l'intérieur de laquelle sont montés un brûleur à gaz ou à fioul, et deux faisceaux de tubes coaxiaux, réalisés dans un matériau thermiquement bon conducteur, dont l'un fait office d'échangeur primaire et l'autre d'échangeur secondaire, chacun de ces faisceaux consistant en un tube, ou en un groupe de tubes disposés bout à bout et enroulés en hélice. De plus, des moyens sont prévus pour faire circuler deux fluides distincts à réchauffer, dit respectivement "primaire" et "secondaire", en particulier de l'eau froide, à l'intérieur du(des) tube(s) constitutif(s) respectivement dudit faisceau primaire et dudit faisceau secondaire.

Selon une disposition spécifique de cet échangeur, deux plaques déflectrices sont intercalées entre le faisceau primaire et le faisceau secondaire et sont disposées parallèlement côte à côte, avec un certain espacement, de façon que l'une ferme une extrémité du faisceau primaire et que l'autre ferme l'extrémité adjacente du faisceau secondaire. Ces deux plaques définissent ainsi un espace à l'intérieur duquel circule un gaz chaud additionnel, amené depuis un conduit extérieur branché sur l'enveloppe.

Ce gaz chaud additionnel participe ainsi au réchauffement du fluide secondaire en traversant les spires du faisceau de tubes de l'échangeur secondaire.

Toutefois, la présence de la seconde plaque déflectrice (plaque aval) ne se justifie que par le fait qu'elle délimite avec la première un espace pour recevoir le gaz chaud additionnel. Pour ce qui est du flux de gaz chaud issu du brûleur, la paire de plaques est équivalente à une plaque déflectrice unique et ce flux de gaz chauds va circuler radialement de l'intérieur vers l'extérieur du faisceau primaire au niveau du brûleur, puis axialement à l'extérieur de l'enroulement en contournant l'ensemble formé par les deux plaques et enfin, radialement de l'extérieur vers l'intérieur du faisceau secondaire, où circule le fluide secondaire.

L'homme du métier n'avait donc aucune raison de chercher dans ce document FR 2 854 229, un enseignement lui permettant de résoudre son problème technique, à savoir tirer parti au mieux de la chaleur résiduelle présente dans les gaz issus de la première source de chaleur (notamment du brûleur) pour réchauffer - ou préchauffer - un second fluide, par exemple de l'eau sanitaire.

On connait, d'après le document US 2007/209606, un échangeur de chaleur présentant des caractéristiques techniques telles que celles mentionnés dans le préambule de la revendication 1.

Toutefois, un tel échangeur ne permet absolument pas de réchauffer un fluide secondaire distinct du fluide primaire. En conséquence, il ne comprend pas d'échangeur secondaire, ni de moyens pour y faire circuler un fluide secondaire, ni de plaque déflectrice intercalée entre l'échangeur primaire et l'échangeur secondaire.

Enfin, on connait aussi d'après le document DE-8 530 184, un dispositif de production de deux fluides chauds primaire et secondaire.

Toutefois, ce dispositif ne comprend par un échangeur de chaleur à condensation conforme à celui de la revendication 1 et notamment ne comprend pas de plaque déflectrice positionnée entre un faisceau primaire et un faisceau secondaire.

L'invention a donc pour objectif de fournir un dispositif de production de fluides chauds comprenant un échangeur de chaleur à condensation et dont le rendement global est amélioré.

Un autre objectif de l'invention est d'augmenter ce rendement global tout en mettant en oeuvre des moyens qui grèvent peu le prix de revient de l'échangeur et n'en augmentent pas l'encombrement de façon trop importante.

Un autre objectif encore est de fournir un dispositif facile à fabriquer en grandes séries et aisément modulable, de façon à pouvoir faire face aux différents besoins de la clientèle tant sur le plan de la capacité de transfert thermique et des quantités des différents fluides à réchauffer que sur le plan de l'encombrement.

A cet effet, l'invention concerne un dispositif de production de fluides chauds, comprenant des moyens d'amenée ou des moyens de production de gaz chauds et un échangeur de chaleur à condensation qui comprend :
- un faisceau de tubes faisant office d'échangeur primaire, ce faisceau consistant en un tube, ou en un groupe de tubes disposés bout à bout, formant un enroulement en hélice, dans lequel la paroi du (des) tube(s) est réalisée dans un matériau thermiquement bon conducteur, ce faisceau étant monté fixement à l'intérieur d'une enveloppe imperméable aux gaz, et munie d'une manchette d'évacuation des gaz,
- une première plaque déflectrice, réalisée dans un matériau thermiquement isolant et réfractaire à la chaleur, par exemple à base de céramique, intercalée entre deux spires consécutives dudit faisceau primaire, cette première plaque déflectrice étant centrée sur l'axe de l'hélice et fermant une partie de l'espace intérieur dudit faisceau primaire,
- un anneau discoïde déflecteur disposé autour du faisceau de tubes faisant office d'échangeur primaire, en aval de ladite première plaque déflectrice par rapport au sens de circulation desdits gaz chauds, cet anneau déflecteur étant fixé à sa périphérie extérieure à ladite enveloppe et à sa périphérie intérieure à l'une des spires dudit échangeur primaire,
- une seconde plaque déflectrice centrée sur ledit axe d'hélice,
les deux plaques déflectrices et l'anneau déflecteur étant ainsi agencés que les gaz chauds traversent radialement, ou approximativement radialement, d'abord une première partie de l'échangeur primaire, située en amont de la première plaque déflectrice, en traversant les interstices séparant ses spires de l'intérieur vers l'extérieur, puis une deuxième partie de l'échangeur primaire s'étendant entre la première plaque déflectrice et l'anneau déflecteur en traversant les interstices séparant ses spires de l'extérieur vers l'intérieur, puis ensuite la dernière partie de l'échangeur primaire s'étendant entre l'anneau déflecteur et la seconde plaque déflectrice en traversant les interstices séparant ses spires de l'intérieur vers l'extérieur,
ledit dispositif de production de fluides chauds comprenant en outre des moyens pour faire circuler un fluide à réchauffer, dit "primaire", en particulier de l'eau froide, à l'intérieur du ou des tube(s) constitutif(s) du faisceau qui fait office d'échangeur primaire, la circulation de ce fluide primaire s'effectuant à contre sens de celle desdits gaz chauds.

Conformément à l'invention, ledit échangeur de chaleur à condensation comprend un second faisceau de tubes faisant office d'échangeur secondaire, monté fixement à l'intérieur de ladite enveloppe de façon coaxiale au premier faisceau de tubes et placé au bout de celui-ci, ce second faisceau consistant également en un tube, ou en un groupe de tubes disposés bout à bout, formant un enroulement en hélice, dans lequel la paroi du (des) tube(s) est réalisée dans un matériau thermiquement bon conducteur, ladite seconde plaque déflectrice est intercalée entre le faisceau primaire et ledit faisceau secondaire, cette seconde plaque déflectrice fermant l'espace intérieur dudit faisceau secondaire, de sorte que lesdits gaz chauds traversent l'échangeur secondaire, en passant à travers les interstices séparant ses spires de l'extérieur vers l'intérieur, avant d'être enfin évacués à l'extérieur à basse température, via ladite manchette d'évacuation des gaz, et ledit dispositif de production de fluides chauds comprend des moyens pour faire circuler séparément au moins un fluide à réchauffer, dit "secondaire", distinct du fluide primaire, à l'intérieur du ou des tube(s) dudit faisceau secondaire, la circulation de ce fluide secondaire s'effectuant également à contre sens de celle desdits gaz chauds.

Selon d'autres caractéristiques avantageuses et non limitatives de l'invention, prises seules ou en combinaison :
- lesdits moyens de production de gaz chauds sont un brûleur à gaz ou à fioul ;
- ledit anneau déflecteur est fixé entre les spires du faisceau primaire et la paroi intérieure de l'enveloppe, de manière à séparer l'espace annulaire ménagé entre la face extérieure des faisceaux de tubes et l'enveloppe, en deux zones, et ce, de manière étanche aux gaz ;

- lesdites plaques déflectrices sont des disques fixés aux spires des faisceaux primaire et secondaire, de façon à obturer l'espace intérieur des faisceaux de manière étanche aux gaz ;
- l'espace intérieur de ladite première partie de l'échangeur primaire, dit "chambre de combustion", est obturé à une extrémité par la première plaque déflectrice et à son autre extrémité, par une façade munie d'une porte traversée par lesdits moyens d'amenée ou de production de gaz chauds ;
- l'espace intérieur du faisceau de qui fait office d'échangeur secondaire, dit "chambre d'évacuation", est obturé à une extrémité par la seconde plaque déflectrice et est relié, à son autre extrémité, à ladite manchette d'évacuation des gaz refroidis ;
- les deux plaques déflectrices et l'anneau discoïde déflecteur sont disposés d'une part parallèlement les uns aux autres, et d'autre part, perpendiculairement à l'axe de l'enroulement en hélice des faisceaux de tubes ;
- la largeur de l'interstice séparant deux spires adjacentes des faisceaux de tubes faisant office d'échangeur primaire et d'échangeur secondaire est constante et notablement plus faible que l'épaisseur de la section droite des tubes constituant ces faisceaux ;
- la paroi des tubes des faisceaux présente une section droite aplatie et ovale, dont le grand axe est perpendiculaire, ou approximativement perpendiculaire, à celui de l'hélice ;
- ladite enveloppe est réalisée en matière plastique résistant à la chaleur, et ledit échangeur de chaleur comprend des moyens de contention mécanique desdits faisceaux de tubes coaxiaux suivant leur direction axiale, tels qu'un jeu de tirants disposés à l'extérieur des faisceaux, parallèlement à l'axe de l'hélice et dont les extrémités sont solidaires d'éléments d'appui s'appliquant contre les deux extrémités opposées de ces faisceaux placés bout à bout, ces moyens de contention étant aptes à absorber les efforts de poussée résultant de la pression interne des fluides qui circulent dans lesdits tubes et tend à en déformer les parois, en évitant que ces efforts ne soient transmis à l'enveloppe ;
- ladite enveloppe est réalisée en matière plastique résistant à la chaleur, et ledit échangeur de chaleur comprend une virole disposée à l'intérieur de ladite enveloppe et à l'extérieur du faisceau de tube faisant office d'échangeur primaire, sur une longueur s'étendant au moins en regard de la première partie de l'échangeur primaire, cette virole assurant une fonction d'écran thermique apte à isoler l'enveloppe de la chaleur émise par les gaz chauds ;
- le dispositif comprend un second échangeur de chaleur, monté en série avec ledit échangeur de chaleur à condensation, de sorte que d'une part, la sortie du fluide primaire de l'échangeur à condensation est connectée à l'embouchure d'entrée du circuit primaire du second échangeur et que l'embouchure de sortie du fluide primaire du second échangeur est connectée à l'entrée du fluide primaire de l'échangeur à condensation et que, d'autre part, la sortie du fluide secondaire de l'échangeur à condensation est connectée à l'embouchure d'entrée du circuit secondaire du second échangeur et l'embouchure de sortie du fluide secondaire du second échangeur soit connectée au point de puisage dudit fluide secondaire, le fluide primaire chaud circulant à l'intérieur dudit second échangeur à contre-courant du fluide secondaire préchauffé dans l'échangeur à condensation ;
- le second échangeur est un échangeur à plaques ;
- le dispositif comprend une vanne à trois voies dont la première voie est connectée à l'embouchure de sortie du fluide primaire du second échangeur et la deuxième voie aux moyens de circulation eux-mêmes connectés à l'entrée du circuit primaire de l'échangeur à condensation, et il comprend également un raccord en T dont deux branches sont connectées respectivement à la sortie du fluide primaire de l'échangeur à condensation et à l'embouchure d'entrée du circuit primaire du second échangeur, la troisième voie de la vanne et la troisième branche du raccord en T étant aptes à être raccordées aux deux extrémités d'un réseau de circulation d'eau de chauffage, par exemple de chauffage central.

D'autres caractéristiques et avantages de l'invention apparaîtront de la description qui va maintenant en être faite, en référence aux dessins annexés, qui en représentent, à titre indicatif mais non limitatif, plusieurs modes de réalisation possibles.

Sur ces dessins :
- la figure 1 est une vue de face schématique d'un premier mode de réalisation de l'échangeur à condensation et du brûleur à gaz du dispositif faisant l'objet de l'invention, coupés selon un plan vertical médian référencé I-I sur la figure 3 ;
- la figure 2 est une vue schématique du dispositif de chauffage de plusieurs fluides faisant l'objet de l'invention qui inclut une vue de face l'échangeur de la figure 1, coupé selon un plan brisé référencé II-II sur la figure 3 ;
- la figure 3 est une vue de côté de l'échangeur, coupé par le plan brisé référencé III-III sur la figure 2 ;
- les figures 4 et 5 sont des vues analogues à la figure 2, mais qui représentent respectivement un deuxième et un troisième mode de réalisation de l'échangeur à condensation.

L'échangeur 1 représenté sur les figures comporte une coque, ou enveloppe, 10 qui délimite une enceinte à l'intérieur de laquelle est monté fixement un double faisceau tubulaire 2, lequel consiste en deux faisceaux de tubes coaxiaux placés bout à bout, dont l'un (2a) fait office d'échangeur primaire et l'autre (2b) d'échangeur secondaire.

Cette enceinte a approximativement une forme générale cylindrique, d'axe horizontal **X-X'**.

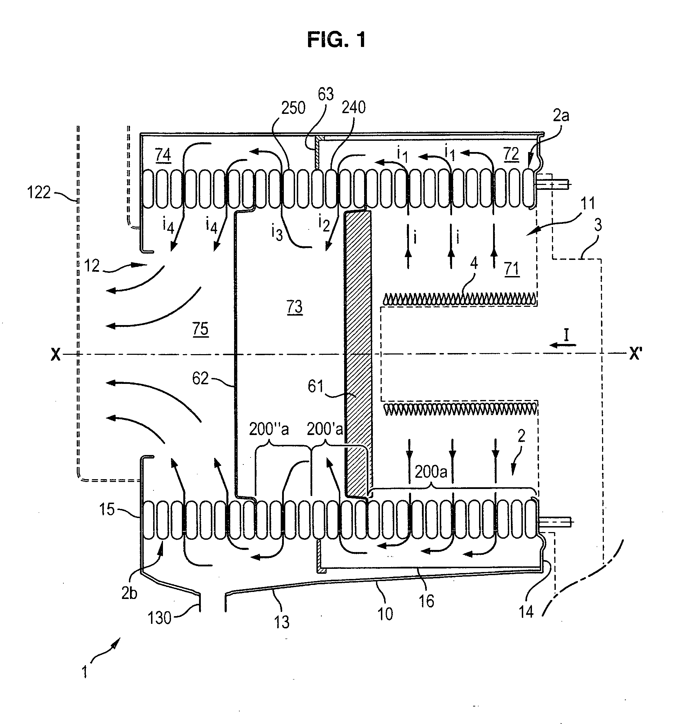

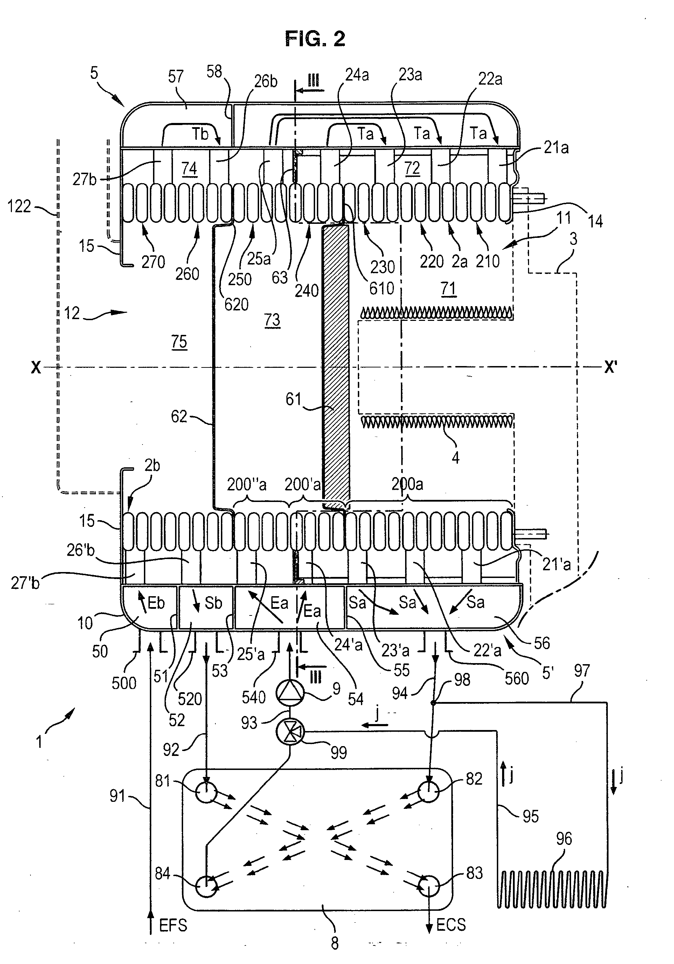

Dans le mode de réalisation représenté sur les figures 1 et 2, le faisceau 2a consiste en un groupe de cinq tubes adjacents formant un enroulement hélicoïdal, d'axe **X-X',** tandis que l'autre faisceau 2b est constitué de deux tubes adjacents, également enroulés en hélice, et d'axe **X-X'.**

Les cinq tubes formant le faisceau 2a et les deux tubes formant le faisceau 2b sont identiques, de même longueur et de même diamètre. Le faisceau 2a a donc une dimension axiale deux fois et demie supérieure à celle du faisceau 2b.

Il s'agit de tubes de section droite aplatie dont les grands côtés sont perpendiculaires à l'axe **X-X'.**

Des bossages (non représentés) prévus sur les grandes faces des tubes jouent le rôle d'entretoises, permettant de délimiter entre chaque spire un interstice de valeur calibrée, sensiblement constante.

Chaque faisceau primaire 2a et secondaire 2b est destiné à être traversé intérieurement par au moins un fluide à réchauffer, qui est par exemple de l'eau.

Dans le mode de réalisation illustré sur la figure 2, les deux tubes hélicoïdaux du faisceau secondaire 2b, (référencés 260 et 270), sont branchés en série, le fluide à réchauffer étant un fluide unique, par exemple de l'eau sanitaire, qui circule de la gauche vers la droite lorsque l'on regarde les figures 1 et 2. Ce fluide est dénommé ci-après "fluide secondaire" par référence au faisceau dans lequel il circule.

Par ailleurs, les cinq tubes hélicoïdaux du faisceau primaire 2a, (référencés 210, 220, 230, 240 et 250), sont branchés respectivement en un groupe de deux et en un groupe de trois en parallèle, et les deux groupes sont branchées en série, le fluide à réchauffer étant un fluide unique, par exemple de l'eau destinée au chauffage de locaux. Le fluide circule également de la gauche vers la droite si on considère les figures 1 et 2. Il est dénommé ci-après "fluide primaire".

Des collecteurs latéraux 5 et 5', qui sont fixés à l'enveloppe 10, permettent le branchement de l'appareil, de manière classique, respectivement sur deux conduits d'amenée des fluides primaire et secondaire, froids, à réchauffer et sur deux conduits d'évacuation de ces mêmes fluides réchauffés.

Ces collecteurs permettent également le transfert de ces fluides d'un tube au suivant. Ils sont visibles uniquement sur les figures 2 à 5.

Chaque tube ou élément tubulaire possède des portions d'extrémité droite, c'est-à-dire d'axe rectiligne, et de section progressivement variable, dont la partie d'extrémité débouchante est circulaire.

Ces parties d'extrémité débouchantes sont référencées respectivement 21a à 25a et 21'a à 25'a pour les tubes du faisceau primaire 2a et 26b, 27b, 26'b et 27'b pour les tubes du faisceau secondaire 2b.

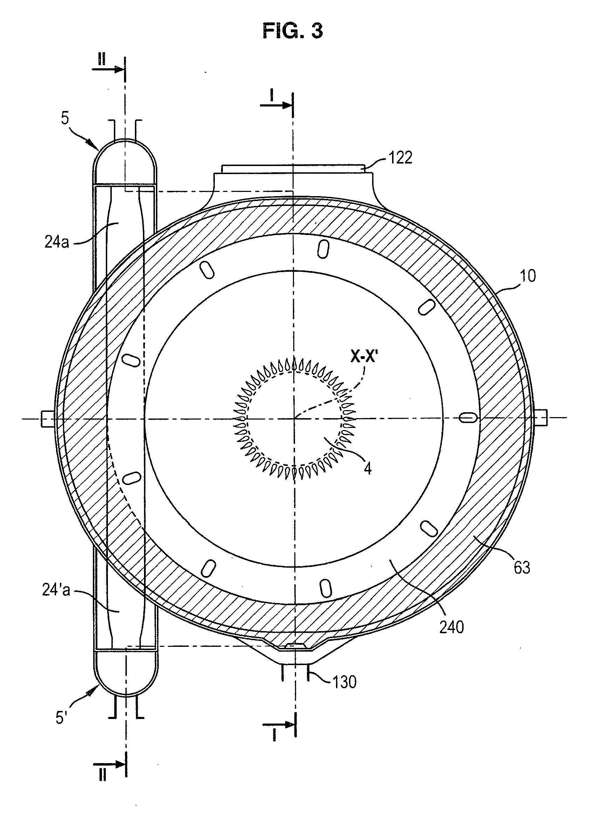

Les portions d'extrémité rectilignes d'entrée et de sortie de chaque tube sont parallèles et s'étendent dans un même plan vertical, tangent à l'enroulement (voir figure 3), leurs embouchures étant dirigées à l'opposé l'une de l'autre, selon une disposition conforme à celle illustrée à la figure 24 du brevet européen 0 678 186 déjà cité.

Les embouchures d'entrée et de sortie des éléments tubulaires sont serties convenablement, et de manière étanche, dans des ouvertures appropriées prévues dans l'enveloppe 10, pour déboucher à l'intérieur des collecteurs 5, 5'.

Le collecteur d'entrée-sortie 5' comprend quatre chambres adjacentes séparées par trois cloisons internes 51, 53 et 55, à savoir une chambre d'entrée 50 du fluide secondaire munie d'un embout 500, une chambre de sortie 52 du fluide secondaire munie d'un embout 520, une chambre d'entrée 54 du fluide primaire munie d'un embout 540 et une chambre de sortie 56 de ce fluide primaire munie d'un embout 560.

Les embouts 500 et 520 sont destinés à être raccordés sur un tuyau d'amenée 91 du fluide secondaire à réchauffer et, respectivement, un tuyau d'évacuation 92 du fluide secondaire réchauffé.

Les embouts 540 et 560 sont destinés à être raccordés sur un tuyau d'amenée 93 du fluide primaire à réchauffer et, respectivement, un tuyau d'évacuation 94 du fluide primaire réchauffé.

La chambre 50 est connectée à la portion d'extrémité d'entrée 27'b du tube 270 et la chambre 52 à la portion d'extrémité de sortie 26'b du tube 260 du faisceau 2b.

La chambre 54 est connectée aux portions d'extrémité d'entrée 24'a et 25'a des deux tubes 240 et 250 du faisceau primaire 2a, dans lesquelles rentre le fluide primaire à réchauffer ; la chambre 56 est connectée aux portions d'extrémité de sortie 21'a, 22'a et 23'a des trois tubes 210, 220 et 230 du faisceau primaire 2a, par lesquelles sort le fluide primaire réchauffé.

Le collecteur opposé 5 possède deux chambres de transfert 57 et 59, séparées par une cloison 58.

La chambre de transfert 57 est raccordée à la fois aux portions d'extrémité de sortie 27b et d'entrée 26b des deux éléments du faisceau secondaire 2b, 2a, et la chambre de transfert 59 est raccordée à la fois aux portions d'extrémité de sortie 24a et 25a des tubes 240 et 250 du faisceau primaire 2a et aux portions d'extrémité d'entrée 21a, 22a et 23a des trois éléments tubulaires 210, 220 et 230 du faisceau 2a.

Sur la figure 2, des flèches symbolisent le parcours des fluides passant dans ces enroulements.

Le flux primaire (flèches Ea) entrant par l'embout 540 est subdivisé en deux flux qui parcourent chacun un enroulement (tube) 240, 250, se rejoignent dans la chambre 59 et sont transférés (flèches **Ta)** dans les trois autres tubes 210, 220 et 230 pour déboucher (flèches **Sa)** dans la chambre 56 et en ressortir par l'embout 560.

La circulation de ce fluide primaire se fait par exemple au moyen d'une pompe 9.

Le flux secondaire entrant (flèche **Eb)** entre via l'embout 500, traverse l'enroulement de tube 270, puis est transféré (flèche **Tb)** par la chambre 57 dans l'enroulement voisin 260 pour déboucher (flèche **Sb**) dans la chambre 52 et en ressortir par l'embout 520.

L'enveloppe 10, tout comme le (ou les) tube(s) 210 à 270, peut être en métal, notamment en acier inoxydable.

Cependant, elle est avantageusement réalisée en matière plastique, comme cela est prévu dans les documents FR 2 846 075 et FR 2 850 451.

Elle est par exemple fabriquée par roto-moulage ou par moulage par injection.

L'enveloppe est faite par exemple de deux demi-coquilles qui sont thermo-soudées l'une à l'autre après que les faisceaux tubulaires aient été installés à l'intérieur de l'une d'elles.

L'enveloppe 10 est ouverte à ses deux extrémités, situées sur la droite et sur la gauche, si on considère la vue des figures 1 et 2.

L'ouverture ménagée dans la paroi avant 14 de l'enveloppe 10 porte la référence 11 et celle ménagée dans la paroi arrière 15, la référence 12.

En cours d'utilisation de l'appareil, une partie de la vapeur d'eau contenue dans les gaz brûlés se condense au contact des parois des tubes 210 à 270.

La référence 13 désigne la paroi de fond de l'enveloppe 10; de manière connue, ce fond est en pente, ce qui permet l'évacuation des condensats vers un orifice de sortie (bonde) 130.

L'ouverture 12 est raccordée à une manchette d'évacuation 122 des gaz refroidis.

Bien entendu, l'orifice 130 est connecté à un conduit d'évacuation des condensats, tandis que la manchette 122 est branchée sur un conduit d'évacuation des fumées, par exemple un conduit de cheminée. Ces conduits ne sont pas représentés sur les figures.

Dans l'hypothèse où l'enveloppe 10 est en matière plastique, des moyens mécaniques de contention axiale des faisceaux de tubes 2a, 2b, du genre décrit dans les deux documents FR 2 846 075 et FR 2 850 451 précités, sont prévus.

Ces moyens permettent d'absorber les efforts de poussée axiale résultant de la pression interne du fluide qui circule dans les tubes et qui tend à en déformer les parois, en évitant que ces efforts ne soient transmis à l'enveloppe.

On dissocie ainsi les deux rôles jusqu'ici dévolus à l'enveloppe, à savoir d'une part, servir d'enceinte pour la circulation et l'évacuation des gaz chauds, ainsi que pour le recueil et l'évacuation des condensats, et, d'autre part, assurer la tenue mécanique du faisceau de tubes.

Ces moyens de contention mécanique n'ont pas été représentés ici afin de ne pas alourdir inutilement les dessins.

De plus, les faisceaux de tubes sont entourés de préférence d'une virole 16 formant écran thermique, pour éviter que l'enveloppe 10 ne soit directement exposée aux gaz chauds, selon une disposition analogue à celle décrite dans le document FR 2 850 451.

La disposition de cette virole sera décrite ultérieurement.

L'ouverture 11 située côté avant de l'enveloppe est obturée par un élément de façade 3, représenté uniquement en pointillés, à des fins de simplification.

De façon connue de l'homme du métier, cet élément de façade est fixé à l'enveloppe de manière hermétique aux gaz.

Il est normalement obturé par une porte amovible, munie d'une ouverture centrale, traversée par un brûleur 4, par exemple un brûleur à gaz (voire au fioul). Le brûleur 4 est solidaire de la porte.

Pour la structure de la porte, on pourra se référer par exemple à celle décrite dans le document FR 2 854 229 précité.

Selon une autre variante de réalisation, la porte peut également être réalisée de façon à présenter la structure décrite dans la demande de brevet français n° 09 51422 du 6 mars 2009, à laquelle on pourra se référer.

Dans ce cas, la porte comprend une paire de tôles métalliques, solidarisées l'une avec l'autre à leur périphérie, la tôle interne étant munie d'une ouverture dans laquelle est disposée un brûleur et la tôle externe étant reliée à un système d'amenée d'un gaz combustible audit brûleur. Un plateau déflecteur comprenant lui même deux parois espacées et faisant office de bouclier thermique est inséré dans l'espace ménagé entre les deux tôles de la porte, afin de limiter les déperditions de chaleur à travers la porte et d'éviter les risques de brûlures au contact de celle-ci, surtout lors d'interventions d'entretien de l'appareil par le personnel spécialisé.

Des moyens appropriés raccordés sur le brûleur 4 permettent d'amener à l'appareil, via un conduit, un mélange de combustible gaz et air, tel que propane et air notamment.

Ces moyens peuvent comprendre un ventilateur, non représenté, apte à insuffler le mélange gazeux dans le brûleur.

Le brûleur 4 est un tube cylindrique à extrémité fermée, dont la paroi est percée d'une multitude de petits trous qui permettent le passage du mélange combustible, radialement de l'intérieur vers l'extérieur du tube.

La surface extérieure de cette paroi constitue la surface de combustion.

Un système d'allumage de type connu, non représenté, comportant par exemple une électrode génératrice d'une étincelle, est bien évidement associé au brûleur.

Ce dernier est positionné coaxialement au milieu de l'enroulement du faisceau 2a faisant office d'échangeur primaire, mais il ne s'étend pas sur toute sa longueur. Il se situe seulement à l'intérieur d'une partie de ce faisceau 2a, dénommée ci-après "première partie de l'échangeur primaire, référencée 200a. Dans l'exemple de réalisation représenté sur les figures 1 et 2, cette première partie 200a comprend ainsi trois enroulements de tubes 210, 220 et 230.

Bien que cela ne soit pas représenté sur les figures, le brûleur 4 pourrait bien entendu être remplacé par un brûleur plat dont la surface de combustion serait perpendiculaire à l'axe X-X' ou bien légèrement bombée.

Conformément à l'invention, l'espace intérieur de la première partie 200a du faisceau de tubes 2a est obturé à son extrémité avant par l'élément de façade 3 et la porte qui lui est associée et à son extrémité avant par une plaque déflectrice 61.

Cette plaque déflectrice 61 est constituée par un disque en matériau isolant et réfractaire à la chaleur, par exemple à base de céramique ; il est supporté par une armature discoïde en forme de plaque mince 610, en acier inoxydable, de plus grand diamètre.

L'armature 610 est fixée entre la dernière spire du tube 230 et la première spire du tube voisin 240.

La première partie 200a du faisceau de tube 2a est ainsi emprisonnée axialement entre la paroi avant 14 et la plaque déflectrice 61, dont l'armature 610 est fixée contre sa dernière spire.

Une seconde plaque déflectrice 62, de préférence non isolée thermiquement, est fixée entre la dernière spire du faisceau primaire 2a, ici la dernière spire du tube 250, coté arrière (à gauche sur les figures 1 et 2) et la première spire du faisceau secondaire 2b, ici la première spire du tube 260, côté avant de l'échangeur.

De façon similaire, cette seconde plaque déflectrice 62 est constituée par un disque supporté par une armature discoïde en forme de plaque mince 620, en acier inoxydable, de plus grand diamètre.

Bien que cela ne soit pas représenté, elle pourrait également être constituée d'un matériau isolant et réfractaire à la chaleur.

Le faisceau secondaire 2b est ainsi emprisonné axialement entre la paroi arrière 15 de l'enveloppe 10 et le déflecteur 62, dont l'armature 620 est fixée contre sa dernière spire.

Les première et seconde plaques déflectrices sont donc centrées sur l'axe X-X' et parallèles entre elles.

De préférence, les plaques déflectrices 61 et 62 sont fixées aux spires de manière étanche aux gaz.

Enfin, un anneau déflecteur discoïde 63, est fixé autour du faisceau primaire 2a, c'est-à-dire à l'extérieur de celui-ci et à l'intérieur de l'enveloppe 10. Il est formé soit à partir d'une tôle mince soit dans une matière plastique résistante à la chaleur et constitué de deux demi-anneaux assemblés par exemple par sertissage.

Il s'étend dans un plan général parallèle à celui des plaques déflectrices 61 et 62, est centré sur l'axe X-X' et est positionné axialement entre les plaques déflectrices 61 et 62.

Cet anneau déflecteur 63 prend appui à la fois sur le petit côté extérieur de l'une des spires, ici la dernière spire (à gauche sur les figures 1 et 2) du quatrième tube 240 et sur la paroi intérieure de l'enveloppe 10, par exemple à l'aide de quelques guides moulés dans l'enveloppe 10 et non représentés sur la figure à des fins de simplification (voir également la figure 3).

De préférence, cette fixation est faite de façon à être étanche aux gaz, par exemple en utilisant un joint d'étanchéité, de sorte que l'espace annulaire s'étendant entre l'extérieur des faisceaux de tubes 2a et 2b et la paroi intérieure de l'enveloppe 10 est scindé en deux parties qui ne communiquent pas directement.

La portion du faisceau primaire 2a qui s'étend axialement entre le déflecteur 61 et l'anneau déflecteur 63 est dénommée ci-après "deuxième partie" 200'a. Dans le mode de réalisation représenté, elle correspond ici au seul quatrième tube 240.

De façon similaire, la portion du faisceau primaire 2a qui s'étend axialement entre l'anneau déflecteur 63 et le déflecteur 62 est dénommée ci-après "troisième partie" 200"a, elle correspond ici au seul cinquième tube 250.

Comme on peut le voir sur les figures 1 et 2, la virole annulaire 16 est bloqué axialement entre la paroi avant 14 de l'enveloppe 10 et l'anneau déflecteur 63.

La forme de cette virole est bien évidemment adaptée pour laisser le passage aux différentes extrémités débouchantes 21a à 24a et 21'a à 24'a qui la traversent pour rejoindre les collecteurs 5, 5'.

Cette virole 16 est ainsi positionnée en regard des première et deuxième parties 200a et 200'a du faisceau primaire 2a qui constituent les zones les plus chaudes de l'échangeur.

Les deux plaques déflectrices 61, 62 et l'anneau déflecteur 63 constituent une série de trois chicanes sur le trajet des gaz de combustion.

A l'intérieur de l'enroulement de tubes, l'espace contenant le brûleur 4 sera dénommé dans la suite de la description, "chambre de combustion 71 ", celui s'étendant entre les deux plaques déflectrices 61 et 62, "chambre intermédiaire 73", et celui s'étendant entre la plaque 62 et la manchette 122, "chambre d'évacuation 75".

Les zones annulaires s'étendant à l'extérieur du faisceau de tubes et à l'intérieur de l'enveloppe 1 sont référencées respectivement 72, pour celle située entre la cloison avant 14 et l'anneau 63, et 74 pour celle située entre l'anneau 63 et la cloison arrière 15.

En référence notamment aux figures 1 et 2, nous allons maintenant expliquer le fonctionnement de cet échangeur.

Le fluide primaire à réchauffer, de l'eau froide par exemple, est mis en circulation par la pompe 9.

Un mélange gazeux combustible, symbolisé par la flèche **I**, est amené au brûleur 4.

Le brûleur 4 ayant été allumé, les gaz chauds (produits de combustion) sont générés par ce dernier dans la chambre de combustion 71. Ils constituent l'unique source de gaz chauds utilisée pour réchauffer le fluide primaire et le fluide secondaire, comme décrit ci-après.

Ces gaz traversent tout d'abord radialement la première partie 200a du faisceau primaire 2a, en passant entre les interstices séparant les spires des tubes 210, 220 et 230, de l'intérieur vers l'extérieur (flèches **i) ;** ils ne peuvent pas s'échapper axialement en raison de la présence de la plaque déflectrice 61.

Dans la chambre de combustion 71, les gaz sont à une température de l'ordre de 950°C à 1000°C. Après passage au travers de la partie 200a, ces gaz subissent un premier refroidissement pour arriver dans la zone annulaire 72 à une température de l'ordre de 100°C à 140°C.

Les gaz traversent alors axialement la zone 72 (flèches **i1**), arrivent au contact de l'anneau déflecteur 63 et sont déviés de façon à traverser radialement les interstices séparant les spires du tube 240 (deuxième partie 200'a du faisceau 2a), de l'extérieur vers l'intérieur (flèche **i2**).

Ils parviennent dans la chambre intermédiaire 73 à une température de l'ordre de 85°C à 90°C.

La présence du matériau réfractaire sur la plaque déflectrice 61 permet d'empêcher la transmission de chaleur du brûleur 4 à la chambre intermédiaire 73.

Un troisième refroidissement des gaz s'opère lorsque ces derniers traversent radialement les spires du tube 250 (troisième partie 200"a du faisceau 2a), de l'intérieur vers l'extérieur (flèche **i3**), ils ne peuvent pas s'échapper axialement en raison de la présence de la plaque déflectrice 62.

Les gaz parviennent dans la zone annulaire 74 a une température toujours inférieure à 75°C, compte tenu des refroidissement précédents. Ceci est important comme cela sera détaillé ultérieurement.

Un quatrième refroidissement s'opère lors du passage des gaz au travers des interstices séparant les spires du faisceau secondaire 2b, de l'extérieur vers l'intérieur (flèches **i4**).

Ces gaz atteignent la chambre d'évacuation 75 où ils sont à une température comprise entre 15°C et 35°C environ, voire même entre 15°C et 25°C. Enfin, ils sont évacués par la manchette 122.

La température des gaz de combustion est abaissée tout au long de leur trajet, par suite du transfert thermique intervenu entre ces gaz chauds et les fluides parcourant les faisceaux 2a et 2b et qui circulent à contre-courant du trajet de ces gaz.

La plaque déflectrice 62 constitue une troisième chicane sur le trajet des gaz chauds.

Sa position est importante. Elle doit toujours être située entre le faisceau primaire 2a et le faisceau secondaire 2b. Elle permet d'abaisser significativement la température des gaz parvenant dans la zone 74 et notamment de garantir que celle-ci sera toujours inférieure à 75°C.

Le fluide secondaire, par exemple l'eau, présent dans le faisceau 2b peut être soit stagnant, soit en circulation. Dans le cas où il est stagnant, la présence de la plaque déflectrice 62 permet d'éviter que ce fluide secondaire ne soit porté à très haute température, ce qui risquerait de conduire à l'endommagement, voire à la rupture des tubes 260 et 270.

En outre, dans le cas où ce fluide secondaire est de l'eau sanitaire, ceci permet d'éviter la formation de calcaire dans les tubes du faisceau secondaire 2b.

L'échangeur 1 précité est utilisé dans le dispositif de production d'au moins deux fluides chauds, conforme à l'invention.

Un tel dispositif est représenté sur la figure 2 et il comprend, outre l'échangeur de chaleur à condensation 1 précité, un second échangeur 8.

Ce second échangeur est par exemple un échangeur à plaques, connu de l'homme du métier et qui ne sera donc pas décrit en détails.

Brièvement, un tel échangeur est composé d'un ensemble de plaques parallèles superposées qui délimitent deux enceintes d'échange thermique parcourues l'une par le fluide primaire et l'autre par le fluide secondaire, ces deux fluides circulant sous forme de couches minces alternées, avec des trajectoires imbriquées l'une dans l'autre.

L'entrée et la sortie du fluide primaire se fait par une paire d'embouchures 82, respectivement 84. De façon similaire, l'entrée et la sortie du fluide secondaire se fait par une paire d'embouchures 81, respectivement 83.

Ces embouchures sont ménagées dans une plaque d'extrémité dans l'empilage, via des "puits", ou cheminées d'entrée et de sortie traversant les plaques internes et communiquant avec les espaces interstitiels constitutifs de l'enceinte correspondante.

Les plaques de l'échangeur sont des plaques minces en métal, thermiquement bon conducteur, généralement en acier inoxydable, qui sont embouties et assemblées par brasage ou par une liaison au moyen de brides boulonnées, avec interposition de joints en caoutchouc.

Le nombre total de plaques est généralement compris entre dix et trente pour des échangeurs de puissance domestique.

L'agencement est conçu pour que les deux flux de fluides entre lesquels intervient l'échange thermique suivent une trajectoire en labyrinthe et circulent à contre-courant l'un de l'autre, afin de favoriser cet échange.

Le tuyau d'évacuation 92 du fluide secondaire qui a été préchauffé dans l'échangeur 1 est connecté à l'embouchure 81, tandis que le tuyau d'évacuation 94 du fluide primaire qui a été réchauffé dans l'échangeur 1 est connecté à l'embouchure 82.

En outre, l'embouchure 84 est connectée à la pompe 9 via le tuyau d'amenée 93.

Selon une variante de réalisation non représentée, le second échangeur 8 pourrait également être un ballon destiné à recevoir le fluide primaire et traversé par un serpentin à l'intérieur duquel circule le fluide secondaire, ou l'inverse.

Le dispositif de production de fluides chauds comprend en outre une vanne à trois voies 99.

Ce dispositif peut être raccordé par exemple à une installation de chauffage central qui comprend plusieurs radiateurs 96 (dont un seul est représenté sur la figure 2) ou à une dalle chauffante qui comprend une tubulure en serpentin intégrée dans le sol.

Dans l'exemple représenté, le radiateur 96 est raccordé à la vanne à trois voies 99 par une canalisation 95 et au tuyau 94 via une canalisation 97 par un piquage ou raccord en T 98.

Le fonctionnement du dispositif est le suivant.

En mode "chauffage du fluide primaire", par exemple pour alimenter les radiateurs 96 en vue du chauffage d'un local, on fait fonctionner la pompe 9 et le brûleur 4 et on positionne la vanne à trois voies 99, de façon que le fluide primaire circule dans l'échangeur primaire 2a, à l'intérieur duquel il se réchauffe jusqu'à atteindre une certaine température, par exemple de 60°C, à la sortie de l'embout 560, puis dans le radiateur 96 avant de retourner via la canalisation 95, à la vanne 99 puis de nouveau à la pompe 9.

Le trajet du fluide dans le circuit de chauffage central est représenté par les flèches j.

En mode "puisage sanitaire", un robinet de puisage non représenté sur les figures permet de faire circuler l'eau dans le circuit secondaire. L'eau froide sanitaire EFS pénètre dans l'échangeur secondaire 2b par l'embout 500, circule dans les tubes 270 puis 260, à l'intérieur desquels elle se réchauffe par échange thermique avec les gaz présents dans les chambres 74 et 75, ressort préchauffée via le tuyau d'évacuation 92, pénètre dans l'échangeur 8 duquel elle ressort à la température souhaitée par l'embouchure 83, sous forme d'eau chaude sanitaire ECS.

Simultanément, le passage en mode "puisage sanitaire" provoque l'activation de la vanne à trois voies 99 qui passe dans une position dans laquelle le retour du fluide primaire depuis la canalisation 95 est impossible. Le fluide primaire qui sort de l'échangeur primaire 2a est alors dirigé vers l'échangeur 8 d'où il ressort par l'embouchure 84 après avoir transmis sa chaleur au fluide secondaire, avant de retourner à la pompe 9.

L'échangeur de chaleur 1 conforme à l'invention et le dispositif de production de fluide chauds qui l'inclut présentent des rendements particulièrement performants par rapport aux dispositifs connus de l'art antérieur.

Dans les dispositifs traditionnels qui associent un échangeur de chaleur principal pour réchauffer uniquement un fluide primaire et un échangeur à plaques pour réchauffer un fluide secondaire, par échange thermique avec ledit fluide primaire, les températures observées sont les suivantes :
- température d'entrée de l'eau froide sanitaire : 10°C,
- température de sortie de l'eau chaude sanitaire : 40°C,
- température du fluide primaire dans l'échangeur à condensation : 60°C à 80°C,
- température de sortie des fumées à l'extérieur : 75°C à 85°C.

Le rendement est dans ce cas de l'ordre de 96% à 97%.

En effet, dans ce type de dispositif, la température de sortie des fumées est conditionnée par la température du fluide primaire qui reste élevée, de ce fait, les fumées ont une température qui reste supérieure au point de rosée qui lui est au maximum de 55°C. Il n'y a donc pas de condensation dans l'échangeur principal et pas de récupération de la chaleur latente contenue dans les fumées. Le rendement est donc médiocre.

Au contraire dans le dispositif objet de l'invention, les températures observées sont les suivantes :
- température d'entrée de l'eau froide sanitaire : 10°C,
- température de sortie de l'eau chaude sanitaire : 40°C,
- température d'entrée de l'eau sanitaire préchauffée dans l'embouchure 81 de l'échangeur 8 : 19°C à 20°C,
- température d'entrée du fluide primaire dans l'embout 540 : 45°C,
- température de sortie du fluide primaire dans l'embout 560 : 68°C,
- température de sortie des fumées à l'extérieur : 18°C à 25°C.

Le rendement est dans ce cas de l'ordre de 107% à 109%, voire même 110%, soit supérieur de 10 à 12% par rapport à l'état de la technique antérieure.

Le dispositif conforme à l'invention permet d'obtenir un double avantage.

D'une part, il permet de récupérer au maximum la chaleur latente des fumées, par un phénomène de condensation remarquable. En effet, l'eau froide sanitaire EFS qui traverse les tubes 260 et 270 est à très basse température, de l'ordre de 10°C. Les produits de combustion et fumées qui passent dans les interstices entre ces tubes sont déjà eux-mêmes à basse température, de l'ordre de 60°C à 75°C dans la chambre 74, car ils sont à leur troisième passage au travers des tubes de l'échangeur primaire. Leur quatrième passage à travers les tubes 260 et 270 contenant de l'eau à 10°C abaisse encore leur température, ce qui explique le très bon rendement de l'échangeur 1.

D'autre part, le fait que le fluide secondaire soit préchauffé dans l'échangeur 1 diminue la quantité d'énergie nécessaire pour l'amener à sa température finale.

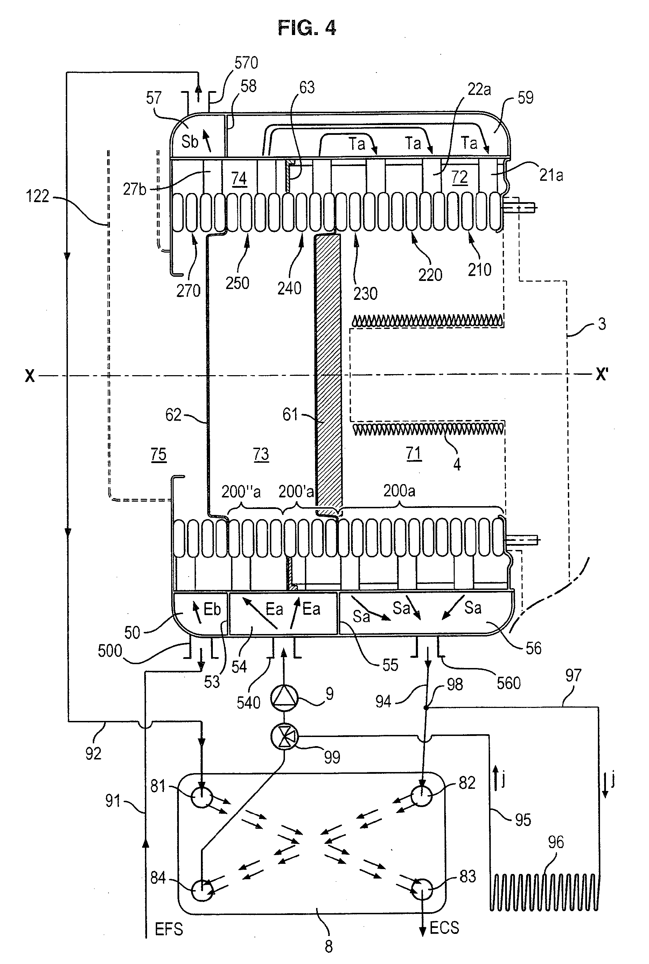

Une première variante de réalisation de l'échangeur de chaleur à condensation est représentée sur la figure 4.

Les éléments identiques ou similaires à ceux du premier mode de réalisation ont été affectés des mêmes chiffres de référence, et ne sera pas donné à nouveau une explication quant à leur nature et à leur fonction.

Cet échangeur se distingue du précédent par le fait que l'échangeur secondaire 2a ne comprend qu'un seul tube 270 au lieu de deux.

De ce fait, la chambre de transfert 57 est munie d'un embout 570 qui est connecté au tuyau d'évacuation 2 et la chambre 52 n'existe pas.

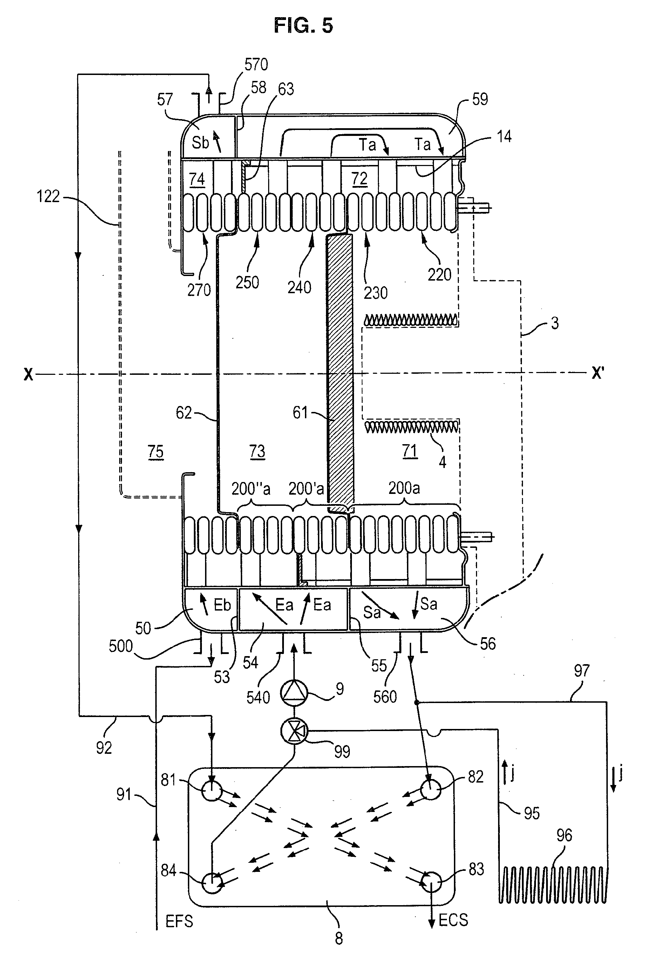

Une seconde variante de réalisation de l'échangeur de chaleur à condensation est représentée sur la figure 5.

Elle se distingue de la première variante en ce que la première partie 200a du faisceau primaire ne comprend que deux tubes au lieu de trois.

On comprend aisément que le nombre de tubes des différentes parties de l'échangeur primaire et de l'échangeur secondaire peut être adapté en fonction des besoins de l'utilisateur, à condition de conserver la pluralité de plaques déflectrices et l'anneau déflecteur qui permettent de refroidir les gaz à la température souhaitée.

Le gaz chaud présent dans la chambre de combustion 71 n'est pas nécessairement généré par un brûleur logé dans le faisceau primaire. Il peut provenir, d'une source extérieure et être acheminé à l'intérieur du faisceau primaire au moyen d'un conduit raccordé axialement sur la cloison 3 et qui constitue alors un moyen d'amenée de ces gaz.

Le dispositif conforme à l'invention pourrait être utilisé pour réchauffer d'autres fluides, tels que de l'huile par exemple.

Il va de soi qu'il est possible, sans sortir du cadre de l'invention, de prévoir des faisceaux de tubes ainsi conçus et connectés qu'ils permettent de réchauffer plus de deux fluides distincts.

Les dimensions du dispositif, régies notamment par la section, le diamètre, et la longueur des faisceaux tubulaires, ainsi que - le cas échéant - par le type de brûleur mis en oeuvre seront adaptées bien sûr à la puissance recherchée et aux conditions d'utilisation.

Enfin, on notera que le dispositif peut avantageusement être équipé d'une sonde de température adaptée pour arrêter l'admission des gaz chauds lorsque la sonde détecte une température excessive prédéterminée.

## Revendications

1. Dispositif de production de fluides chauds, comprenant des moyens d'amenée ou des moyens de production (4) de gaz chauds et un échangeur de chaleur à condensation (1) qui comprend :
- un faisceau de tubes (2a) faisant office d'échangeur primaire, ce faisceau consistant en un tube, ou en un groupe de tubes disposés bout à bout, formant un enroulement en hélice, dans lequel la paroi du (des) tube(s) est réalisée dans un matériau thermiquement bon conducteur, ce faisceau (2a) étant monté fixement à l'intérieur d'une enveloppe (10) imperméable aux gaz, et munie d'une manchette (122) d'évacuation des gaz,
- une première plaque déflectrice (61), réalisée dans un matériau thermiquement isolant et réfractaire à la chaleur, par exemple à base de céramique, intercalée entre deux spires consécutives dudit faisceau primaire (2a), cette première plaque déflectrice (61) étant centrée sur l'axe **(X-X')** de l'hélice et fermant une partie de l'espace intérieur dudit faisceau primaire (2a),
- un anneau discoïde déflecteur (63) disposé autour du faisceau de tubes (2a) faisant office d'échangeur primaire, en aval de ladite première plaque déflectrice (61) par rapport au sens de circulation desdits gaz chauds, cet anneau déflecteur (63) étant fixé à sa périphérie extérieure à ladite enveloppe (10) et à sa périphérie intérieure à l'une des spires dudit échangeur primaire (2a),
- une seconde plaque déflectrice (62) centrée sur ledit axe d'hélice (**X-X'**),
les deux plaques déflectrices (61, 62) et l'anneau déflecteur (63) étant ainsi agencés que les gaz chauds traversent radialement, ou approximativement radialement, d'abord une première partie (200a) de l'échangeur primaire (2a), située en amont de la première plaque déflectrice (61), en traversant les interstices séparant ses spires de l'intérieur vers l'extérieur, puis une deuxième partie (200'a) de l'échangeur primaire (2a) s'étendant entre la première plaque déflectrice (61) et l'anneau déflecteur (63) en traversant les interstices séparant ses spires de l'extérieur vers l'intérieur, puis ensuite la dernière partie de l'échangeur primaire (200"a) s'étendant entre l'anneau déflecteur (63) et la seconde plaque déflectrice (62) en traversant les interstices séparant ses spires de l'intérieur vers l'extérieur,
ledit dispositif de production de fluides chauds comprenant en outre des moyens (9) pour faire circuler un fluide à réchauffer, dit "primaire", en particulier de l'eau froide, à l'intérieur du ou des tube(s) (210, 220, 230, 240, 250) constitutif(s) du faisceau (2a) qui fait office d'échangeur primaire, la circulation de ce fluide primaire s'effectuant à contre sens de celle desdits gaz chauds,
ce dispositif de production de fluides chauds étant **caractérisé par le fait que** ledit échangeur de chaleur à condensation (1) comprend un second faisceau de tubes (2b) faisant office d'échangeur secondaire, monté fixement à l'intérieur de ladite enveloppe (10) de façon coaxiale au premier faisceau de tubes (2a) et placé au bout de celui-ci, ce second faisceau (2b) consistant également en un tube, ou en un groupe de tubes disposés bout à bout, formant un enroulement en hélice, dans lequel la paroi du (des) tube(s) est réalisée dans un matériau thermiquement bon conducteur, **par le fait que** ladite seconde plaque déflectrice (62) est intercalée entre le faisceau primaire (2a) et ledit faisceau secondaire (2b), cette seconde plaque déflectrice (62) fermant l'espace intérieur dudit faisceau secondaire (2b), de sorte que lesdits gaz chauds traversent l'échangeur secondaire (2b), en passant à travers les interstices séparant ses spires de l'extérieur vers l'intérieur, avant d'être enfin évacués à l'extérieur à basse température, via ladite manchette (122) d'évacuation des gaz, et **par le fait que** ledit dispositif de production de fluides chauds comprend des moyens pour faire circuler séparément au moins un fluide à réchauffer, dit "secondaire", distinct du fluide primaire, à l'intérieur du ou des tube(s) (260, 270) dudit faisceau secondaire (2b), la circulation de ce fluide secondaire s'effectuant également à contre sens de celle desdits gaz chauds.

2. Dispositif selon la revendication 1, **caractérisé par le fait que** lesdits moyens de production (4) de gaz chauds sont un brûleur à gaz ou à fioul (4).

3. Dispositif selon la revendication 1 ou 2, **caractérisé par le fait que** ledit anneau déflecteur (63) est fixé entre les spires du faisceau primaire (2a) et la paroi intérieure de l'enveloppe (10), de manière à séparer l'espace annulaire ménagé entre la face extérieure des faisceaux de tubes (2a, 2b) et l'enveloppe (10), en deux zones (72, 74), et ce, de manière étanche aux gaz.

4. Dispositif selon l'une quelconque des revendications précédentes, **caractérisé par le fait que** lesdites plaques déflectrices (61, 62) sont des disques fixés aux spires des faisceaux primaire (2a) et secondaire (2b), de façon à obturer l'espace intérieur des faisceaux (2a, 2b) de manière étanche aux gaz.

5. Dispositif selon l'une quelconque des revendications précédentes, **caractérisé par le fait que** l'espace intérieur de ladite première partie (200a) de l'échangeur primaire (2a), dit "chambre de combustion" (71), est obturé à une extrémité par la première plaque déflectrice (61) et à son autre extrémité, par une façade (3) munie d'une porte traversée par lesdits moyens d'amenée ou de production (4) de gaz chauds.

6. Dispositif selon l'une quelconque des revendications précédentes, **caractérisé par le fait que** l'espace intérieur du faisceau de tubes (2b) qui fait office d'échangeur secondaire, dit "chambre d'évacuation" (75), est obturé à une extrémité par la seconde plaque déflectrice (62) et est relié, à son autre extrémité, à ladite manchette (122) d'évacuation des gaz refroidis.

7. Dispositif selon l'une quelconque des revendications précédentes, **caractérisé par le fait que** les deux plaques déflectrices (61, 62) et l'anneau discoïde déflecteur (63) sont disposés d'une part parallèlement les uns aux autres, et d'autre part, perpendiculairement à l'axe **(X-X')** de l'enroulement en hélice des faisceaux de tubes (2a, 2b).

8. Dispositif selon l'une quelconque des revendications précédentes, **caractérisé par le fait que** la largeur de l'interstice séparant deux spires adjacentes des faisceaux (2a, 2b) de tubes faisant office d'échangeur primaire et d'échangeur secondaire est constante et notablement plus faible que l'épaisseur de la section droite des tubes (210, 220, 230, 240, 250, 260, 270) constituant ces faisceaux.

9. Dispositif selon l'une quelconque des revendications précédentes, **caractérisé par le fait que** la paroi des tubes (210, 220, 230, 240, 250, 260, 270) des faisceaux (2a, 2b) présente une section droite aplatie et ovale, dont le grand axe est perpendiculaire, ou approximativement perpendiculaire, à celui (X-X') de l'hélice.

10. Dispositif selon l'une quelconque des revendications précédentes, **caractérisé par le fait que** ladite enveloppe (10) est réalisée en matière plastique résistant à la chaleur, et **par le fait que** ledit échangeur de chaleur (1) comprend des moyens de contention mécanique desdits faisceaux de tubes (2a, 2b) coaxiaux suivant leur direction axiale, tels qu'un jeu de tirants disposés à l'extérieur des faisceaux, parallèlement à l'axe **(X-X')** de l'hélice et dont les extrémités sont solidaires d'éléments d'appui s'appliquant contre les deux extrémités opposées de ces faisceaux placés bout à bout, ces moyens de contention étant aptes à absorber les efforts de poussée résultant de la pression interne des fluides qui circulent dans lesdits tubes et tend à en déformer les parois, en évitant que ces efforts ne soient transmis à l'enveloppe (10).

11. Dispositif selon l'une quelconque des revendications précédentes, **caractérisé par le fait que** ladite enveloppe (10) est réalisée en matière plastique résistant à la chaleur, et **par le fait que** ledit échangeur de chaleur (1) comprend une virole (16) disposée à l'intérieur de ladite enveloppe (10) et à l'extérieur du faisceau de tube (2a) faisant office d'échangeur primaire, sur une longueur s'étendant au moins en regard de la première partie (200a) de l'échangeur primaire, cette virole (16) assurant une fonction d'écran thermique apte à isoler l'enveloppe (10) de la chaleur émise par les gaz chauds.

12. Dispositif selon l'une quelconque des revendications précédentes, **caractérisé par le fait qu'**il comprend un second échangeur de chaleur (8) monté en série avec ledit échangeur de chaleur à condensation (1), de sorte que d'une part, la sortie (560) du fluide primaire de l'échangeur à condensation (1) est connectée à l'embouchure d'entrée (82) du circuit primaire du second échangeur (8) et que l'embouchure de sortie (84) du fluide primaire du second échangeur (8) est connectée à l'entrée (540) du fluide primaire de l'échangeur à condensation (1) et que, d'autre part, la sortie (520, 570) du fluide secondaire de l'échangeur à condensation (1) est connectée à l'embouchure d'entrée (81) du circuit secondaire du second échangeur (8) et l'embouchure de sortie (83) du fluide secondaire du second échangeur (8) soit connectée au point de puisage dudit fluide secondaire, le fluide primaire chaud circulant à l'intérieur dudit second échangeur (8) à contre-courant du fluide secondaire préchauffé dans l'échangeur à condensation (1).

13. Dispositif selon la revendication 12, **caractérisé par le fait que** le second échangeur (8) est un échangeur à plaques.

14. Dispositif de production domestique d'un fluide secondaire, tel que de l'eau chaude sanitaire et d'un fluide primaire, tel que de l'eau de chauffage, selon la revendication 12 ou la revendication 13, **caractérisé par le fait qu'**il comprend une vanne à trois voies (99) dont la première voie est connectée à l'embouchure de sortie (84) du fluide primaire du second échangeur (8) et la deuxième voie aux moyens de circulation (9) eux-mêmes connectés à l'entrée (540) du circuit primaire de l'échangeur à condensation (1), et **par le fait qu'**il comprend également un raccord en T (98) dont deux branches sont connectées respectivement à la sortie (560) du fluide primaire de l'échangeur à condensation (1) et à l'embouchure d'entrée (82) du circuit primaire du second échangeur (8), la troisième voie de la vanne (99) et la troisième branche du raccord en T (98) étant aptes à être raccordées aux deux extrémités (95, 97) d'un réseau de circulation d'eau de chauffage, par exemple de chauffage central.

## Patentansprüche

1. Vorrichtung zur Erzeugung warmer Fluide, Folgendes umfassend: ein Mittel zur Zuführung oder ein Mittel zur Erzeugung (4) warmer Gase und einen Kondensationswärmetauscher (1), der Folgendes umfasst:
- ein Röhrenbündel (2a), das als primärer Wärmetauscher dient, wobei das Bündel aus einer Röhre oder aus einem Satz von aneinandergefügten Röhren besteht, die eine schraubenförmige Aufwicklung bildet oder bilden, und wobei die Wand der einen oder mehreren Röhren aus einem gut wärmeleitenden Material hergestellt ist, wobei das Bündel (2a) im Inneren eines Mantels (10) fest montiert ist, der für die Gase undurchlässig ist und der mit einer Manschette (122) zum Abführen der Gase ausgestattet ist,
- eine erste Ablenkplatte (61), die aus einem wärmeisolierenden und hitzebeständigen Material realisiert ist, beispielsweise auf Keramikbasis, und die zwischen zwei aufeinanderfolgenden Windungen des primären Bündels (2a) eingefügt ist, wobei die erste Ablenkplatte (61) auf der Achse (X-X') der Schraube zentriert ist und einen Teil des Innenraums des primären Bündels (2a) verschließt,
- einen scheibenförmigen Ablenkring (63), der um das als primärer Wärmetauscher dienende Röhrenbündel (2a) herum angeordnet ist, und dies stromabwärts von der ersten Ablenkplatte (61) in Bezug auf die Strömungsrichtung der warmen Gase, wobei der Ablenkring (63) an seinem äußeren Rand am Mantel (10) und an seinem inneren Rand an einer der Windungen des primären Wärmetauschers (2a) befestigt ist,
- eine zweite Ablenkplatte (62), die auf der Schraubenachse (X-X') zentriert ist,
wobei die beiden Ablenkplatten (61, 62) und der Ablenkring (63) so angeordnet sind, dass die warmen Gase radial oder fast radial Folgendes durchströmen: zuerst einen ersten Teil (200a) des primären Wärmetauschers (2a), der sich stromaufwärts von der ersten Ablenkplatte (61) befindet, wobei sie die Lücken, die dessen Windungen trennen, von innen nach außen durchströmen, anschließend einen zweiten Teil (200'a) des primären Wärmetauschers (2a), der sich zwischen der ersten Ablenkplatte (61) und dem Ablenkring (63) erstreckt, wobei sie die Lücken, die dessen Windungen trennen, von außen nach innen durchströmen, und schließlich den letzten Teil des primären Wärmetauschers (200"a), der sich zwischen dem Ablenkring (63) und der zweiten Ablenkplatte (62) erstreckt, wobei sie die Lücken, die dessen Windungen trennen, von innen nach außen durchströmen,
wobei die Vorrichtung zur Erzeugung warmer Fluide außerdem ein Mittel (9) umfasst, um ein aufzuwärmendes Fluid, das als "primär" bezeichnet wird und bei dem es sich insbesondere um kaltes Wasser handelt, fließen zu lassen, und dies im Inneren der einen oder mehreren Röhren (210, 220, 230, 240, 250), die das Bündel (2a) bilden, das als primärer Wärmetauscher dient, wobei der Fluss des primären Fluids in der Gegenrichtung zu derjenigen der warmen Gase stattfindet,
wobei die Vorrichtung zur Erzeugung warmer Fluide **dadurch gekennzeichnet ist, dass** der Kondensationswärmetauscher (1) ein zweites Röhrenbündel (2b) umfasst, das als sekundärer Wärmetauscher dient und das im Inneren des Mantels (10) fest montiert ist, und dies koaxial zum ersten Röhrenbündel (2a) und an dessen Ende angeordnet, wobei das zweite Bündel (2b) ebenfalls aus einer Röhre oder aus einem Satz von aneinandergefügten Röhren besteht, die eine schraubenförmige Aufwicklung bildet oder bilden, und wobei die Wand der einen oder mehreren Röhren aus einem gut wärmeleitenden Material hergestellt ist, und dadurch, dass die zweite Ablenkplatte (62) zwischen dem primären Bündel (2a) und dem sekundären Bündel (2b) eingefügt ist, wobei die zweite Ablenkplatte (62) den Innenraum des sekundären Bündels (2b) derart verschließt, dass die warmen Gase durch den sekundären Wärmetauscher (2b) strömen, wobei sie die Lücken, die dessen Windungen trennen, von außen nach innen durchströmen, bevor sie schließlich mit niedriger Temperatur über die Manschette (122) zum Abführen der Gase nach außen abgeführt werden, und dadurch, dass die Vorrichtung zur Erzeugung warmer Fluide ein Mittel umfasst, um wenigstens ein aufzuwärmendes Fluid, das als "sekundär" bezeichnet wird und das vom primären Fluid verschieden ist, getrennt fließen zu lassen, und dies im Inneren der einen oder mehreren Röhren (260, 270) des sekundären Bündels (2b), wobei der Fluss des sekundären Fluids ebenfalls in der Gegenrichtung zu derjenigen der warmen Gase stattfindet.

2. Vorrichtung nach Anspruch 1, **dadurch gekennzeichnet, dass** das Mittel (4) zum Erzeugen von warmen Gasen ein Gas- oder Ölbrenner (4) ist.

3. Vorrichtung nach Anspruch 1 oder 2, **dadurch gekennzeichnet, dass** der Ablenkring (63) zwischen den Windungen des primären Bündels (2a) und der Innenwand des Mantels (10) befestigt ist, und dies derart, dass der ringförmige Raum, der zwischen der Außenseite der Röhrenbündel (2a, 2b) und dem Mantel (10) ausgebildet ist, in zwei Zonen (72, 74) aufgeteilt wird, und dies auf eine für die Gase abdichtende Weise.

4. Vorrichtung nach einem der vorhergehenden Ansprüche, **dadurch gekennzeichnet, dass** die Ablenkplatten (61, 62) Scheiben sind, die an den Windungen des primären (2a) und sekundären (2b) Bündels befestigt sind, und dies derart, dass sie den Innenraum der Bündel (2a, 2b) für die Gase abdichtend verschließen.

5. Vorrichtung nach einem der vorhergehenden Ansprüche, **dadurch gekennzeichnet, dass** der Innenraum des ersten Teils (200a) des primären Wärmetauschers (2a), der als "Verbrennungskammer" (71) bezeichnet wird, an einem Ende durch die erste Ablenkplatte (61) verschlossen ist und an seinem anderen Ende durch eine Frontwand (3), die mit einer Türe ausgestattet ist, durch die das Mittel zur Zuführung oder zur Erzeugung (4) warmer Gase verläuft.

6. Vorrichtung nach einem der vorhergehenden Ansprüche, **dadurch gekennzeichnet, dass** der Innenraum des Röhrenbündels (2b), das als sekundärer Wärmetauscher dient, der als "Abführungskammer" (75) bezeichnet wird, an einem Ende durch die zweite Ablenkplatte (62) verschlossen ist und an seinem anderen Ende mit der Manschette (122) zur Abführung der abgekühlten Gase verbunden ist.

7. Vorrichtung nach einem der vorhergehenden Ansprüche, **dadurch gekennzeichnet, dass** die beiden Ablenkplatten (61, 62) und der scheibenförmige Ablenkring (63) zum einen parallel zueinander, zum anderen senkrecht zur Achse (X-X') der schraubenförmigen Aufwicklung der Röhrenbündel (2a, 2b) angeordnet sind.

8. Vorrichtung nach einem der vorhergehenden Ansprüche, **dadurch gekennzeichnet, dass** die Breite der Lücke, die zwei benachbarte Windungen der Röhrenbündel (2a, 2b), die als primärer Wärmetauscher und als sekundärer Wärmetauscher dienen, trennt, konstant ist und insbesondere kleiner als die Dicke des Querschnitts der Röhren (210, 220, 230, 240, 250, 260, 270), die diese Bündel bilden.

9. Vorrichtung nach einem der vorhergehenden Ansprüche, **dadurch gekennzeichnet, dass** die Wand der Röhren (210, 220, 230, 240, 250, 260, 270) der Bündel (2a, 2b) einen abgeflachten und ovalen Querschnitt hat, dessen große Achse senkrecht oder in etwa senkrecht zu derjenigen (X-X') der Schraube ist.

10. Vorrichtung nach einem der vorhergehenden Ansprüche, **dadurch gekennzeichnet, dass** der Mantel (10) aus einem hitzebeständigen Kunststoffmaterial hergestellt ist, und dadurch, dass der Wärmetauscher (1) Mittel zur mechanischen Beaufschlagung der Röhrenbündel (2a, 2b), die in ihrer axialen Richtung koaxial sind, umfasst, wie etwa einen Satz Zugelemente, die außerhalb der Bündel angeordnet sind, parallel zur Achse (X-X') der Schraube, und deren Enden fest mit Auflageelementen verbunden sind, die an den beiden entgegengesetzten Enden der aneinandergefügt angeordneten Bündel anliegen, wobei die Beaufschlagungsmittel dafür eingerichtet sind, die Druckkräfte zu absorbieren, die sich aus dem inneren Druck der in den Röhren fließenden Fluide ergeben, der versucht deren Wände zu verformen, wobei vermieden wird, dass diese Kräfte auf den Mantel (10) übertragen werden.

11. Vorrichtung nach einem der vorhergehenden Ansprüche, **dadurch gekennzeichnet, dass** der Mantel (10) aus einem hitzebeständigen Kunststoff hergestellt ist, und dadurch, dass der Wärmetauscher (1) einen Ringbeschlag (16) umfasst, der im Inneren des Mantels (10) und außerhalb des Röhrenbündels (2a), das als primärer Wärmetauscher dient, angeordnet ist, und dies auf einer Länge, die sich wenigstens entlang des ersten Teils (200a) des primären Wärmetauschers erstreckt, wobei der Ringbeschlag (16) die Funktion eines Hitzeschilds bereitstellt, die dafür geeignet ist, den Mantel (10) von der Hitze abzuschirmen, die von den warmen Gasen abgegeben wird.

12. Vorrichtung nach einem der vorhergehenden Ansprüche, **dadurch gekennzeichnet, dass** sie einen zweiten Wärmetauscher (8) umfasst, der in Reihe mit dem Kondensationswärmetauscher (1) montiert ist, und dies derart, dass zum einen der Ausgang (560) des primären Fluids des Kondensationswärmetauschers (1) mit der Eingangsöffnung (82) des Primärkreislaufs des zweiten Wärmetauschers (8) verbunden ist und dass die Ausgangsöffnung (84) des primären Fluids des zweiten Wärmetauschers (8) mit dem Eingang (540) des primären Fluids des Kondensationswärmetauschers (1) verbunden ist, und das zum anderen der Ausgang (520, 570) des sekundären Fluids des Kondensationswärmetauschers (1) mit der Eingangsöffnung (81) des Sekundärkreislaufs des zweiten Wärmetauschers (8) verbunden ist und die Ausgangsöffnung (83) des sekundären Fluids des zweiten Wärmetauschers (8) mit dem Einspeisungspunkt des sekundären Fluids verbunden ist, wobei das warme primäre Fluid im Inneren des zweiten Wärmetauschers (8) gegen die Flussrichtung des sekundären Fluids, das im Kondensationswärmetauscher (1) vorgeheizt wurde, fließt.

13. Vorrichtung nach Anspruch 12, **dadurch gekennzeichnet, dass** der zweite Wärmetauscher (8) ein Plattenwärmetauscher ist.

14. Vorrichtung zur häuslichen Erzeugung eines sekundären Fluids, wie etwa häuslichem Warmwasser, und eines primären Fluids, wie etwa Heizungswasser, nach Anspruch 12 oder Anspruch 13, **dadurch gekennzeichnet, dass** sie ein Dreiwegventil (99) umfasst, dessen erster Weg mit der Ausgangsöffnung (84) des primären Fluids des zweiten Wärmetauschers (8) verbunden ist und dessen zweiter Weg mit dem Mittel (9) zum Fließen lassen verbunden ist, das seinerseits mit dem Eingang (540) des Primärkreislaufs des Kondensationswärmetauschers (1) verbunden ist, und dadurch, dass sie außerdem einen T-Anschluss (98) umfasst, von dem zwei Zweige mit dem Ausgang (560) des primären Fluids des Kondensationswärmetauschers (1) bzw. mit der Eingangsöffnung (82) des Primärkreislaufs des zweiten Wärmetauschers (8) verbunden sind, wobei der dritte Weg des Ventils (99) und der dritte Zweig des T-Anschlusses (98) dafür eingerichtet sind, mit den beiden Enden (95, 97) eines Heizungskreislaufs, beispielsweise einer Zentralheizung, verbunden zu werden.

## Claims

1. A device for producing hot fluids, comprising means (4) for conveying or means for producing hot gases and a condensing heat exchanger (1) which comprises:
- a bundle of tubes (2a) acting as a primary exchanger, this bundle consisting in a tube, or in a group of tubes positioned end-to-end, forming a helical winding, in which the wall of the tube(s) is made in thermally good conducting material, this bundle (2a) being fixedly mounted inside a gas-tight housing (10), and provided with a gas discharge trunk (122),
- a first deflector plate (61), made in a heat-insulating and heat-refractory material, for example based on ceramic, inserted between two consecutive turns of said primary bundle (2a), this first deflector plate (61) being centered on the axis (X-X') of the helix and closing a portion of the inner space of said primary bundle (2a),
- a discoidal deflecting ring (63) positioned around the bundle of tubes (2a) acting as a primary exchanger, downstream from said first deflector plate (61) relatively to the direction of circulation of said hot gases, this deflecting ring (63) being attached at its outer periphery to said housing (10) and at its inner periphery to one of the turns of the primary exchanger (2a),
- a second deflector plate (62) centered on said helix axis (X-X'),
both deflector plates (61, 62) and the deflecting ring (63) being thus laid out so that the hot gases first cross radially, or approximately radially, a first portion (200a) of the primary exchanger (2a) located upstream from the first deflector plate (61), by crossing the interstices separating its turns from the inside outwards, and then a second portion (200'a) of the primary exchanger (2a) extending between the first deflector plate (61) and the deflecting ring (63) by crossing the interstices separating its turns from the outside inwards, and then the last portion of the primary exchanger (200" a) extending between the deflecting ring (63) and the second deflector plate (62) by crossing the interstices separating its turns from the inside outwards,
said device for producing hot fluids further comprising means (9) for circulating a fluid to be heated up, a so-called "primary" fluid, in particular cold water, inside the constitutive tube(s) (210, 220, 230, 240, 250) of the bundle (2a) which acts as a primary exchanger, the circulation of this primary fluid being carried out in an opposite direction to that of said hot gases,
this device for producing hot fluids being **characterized by** the fact that said condensing heat exchanger (1) comprises a second bundle of tubes (2b) acting as a secondary exchanger, fixedly mounted inside said housing (10) coaxially with the first bundle of tubes (2a) and placed at the end of the latter, this second bundle (2b) also consisting in a tube, or in a group of tubes positioned end-to-end, forming a helical winding, in which the wall of the tube(s) is made in a thermally good conducting material, by the fact that said second deflector plate (62) is inserted between the primary bundle (2a) and said secondary bundle (2b), this second deflector plate (62) closing the inner space of said secondary bundle (2b), so that said hot gases cross the secondary exchanger (2b), by passing through the interstices separating its turns from the outside inwards, before being finally discharged on the outside at low temperature, via said gas discharge trunk (122), and by the fact that said device for producing hot fluids comprises means for separately circulating at least one fluid to be heated up, a so-called "secondary" fluid, distinct from the primary fluid, inside the tube(s) (260,270) of said secondary bundle (2b), the circulation of this secondary fluid also being carried out in an opposite direction to that of said hot gases.

2. The device according to claim 1, **characterized by** the fact that said means (4) for producing hot gases are a gas or fuel oil burner (4).

3. The device according to claim 1 or 2, **characterized by** the fact that said deflecting ring (63) is attached between the turns of the primary bundle (2a) and the inner wall of the housing (10), so as to separate the ring-shaped space made between the outer face of the bundles of tube(s) (2a, 2b) and the housing (10), into two areas (72, 74) and this in a gas-tight way.

4. The device according to any of the preceding claims, **characterized by** the fact that said deflector plates (61, 62) are discs attached to the turns of the primary (2a) and secondary (2b) bundles, so as to obturate the inner space of the bundles (2a, 2b) in a gas-tight way.

5. The device according to any of the preceding claims, **characterized by** the fact that the inner space of said first portion (200a) of the primary exchanger (2a), a so-called "combustion chamber" (71), is obturated at one end by the first deflector plate (61) and at its other end by a frontage (3) provided with a gate crossed by said means (4) for conveying or producing hot gases.

6. The device according to any of the preceding claims, **characterized by** the fact that the inner space of the bundle of tubes (2b) which act as a secondary exchanger, a so-called "discharge chamber" (75), is obturated at one end by the second deflector plate (62) and is connected at its other end to said trunk (122) for discharging the cooled gases.

7. The device according to any of the preceding claims, **characterized by** the fact that both deflector plates (61, 62) and the discoidal deflecting ring (63) are positioned parallel with each other on the one hand, and perpendicular to the axis (X-X') of the helical winding of the bundles of tubes (2a, 2b) on the other hand.

8. The device according to any of the preceding claims, **characterized by** the fact that the width of the interstice separating two adjacent turns of the bundles (2a, 2b) of tubes acting as a primary exchanger and as a secondary exchanger is constant and notably smaller than the thickness of the cross-section of the tubes (210, 220, 230, 240, 250, 260, 270) making up these bundles.

9. The device according to any of the preceding claims, **characterized by** the fact that the wall of the tubes (210, 220, 230, 240, 250, 260, 270) of the bundles (2a, 2b) have a flattened and oval cross-section, the major axis of which is perpendicular or approximately perpendicular to that (X-X') of the helix.

10. The device according to any of the preceding claims, **characterized by** the fact that said housing (10) is made in a heat-resistant plastic material, and by the fact that said heat exchanger (1) comprises mechanical means for restraining said bundles of coaxial tubes (2a, 2b) along their axial direction, such as a set of tie-rods positioned on the outside of the bundles, parallel to the axis (X-X') of the helix and the ends of which are firmly attached to supporting elements applied against both opposite ends of these bundles placed end-to-end, these restraining means being capable of absorbing the thrust forces resulting from the internal pressure of the fluids which circulate in said tubes and which pressure tends to deform the walls thereof, by avoiding transmission of these forces to the housing (10).

11. The device according to any of the preceding claims, **characterized by** the fact that said housing (10) is made in a heat-resistant plastic material, and by the fact that said heat exchanger (1) comprises a ferrule (16) positioned inside said housing (10) and on the outside of the tube bundle (2a) acting as a primary exchanger, on a length at least extending facing the first portion (200a) of the primary exchanger, this ferrule (16) ensuring a thermal screen function capable of insulating the housing (10) from the heat emitted by the hot gases.

12. The device according to any of the preceding claims, **characterized by** the fact that it comprises a second heat exchanger (8) mounted in series with said condensing heat exchanger (1) so that on the one hand, the primary fluid outlet (560) of the condensing exchanger (1) is connected to the inlet mouth (82) of the primary circuit of the second exchanger (8) and that the primary fluid outlet mouth (84) of the second exchanger (8) is connected to the primary fluid inlet (540) of the condensing exchanger (1) and that, on the other hand, the secondary fluid outlet (520, 570) of the condensing exchanger (1) is connected to the inlet mouth (81) of the secondary circuit of the second exchanger (8) and the secondary fluid outlet mouth (83) of the second exchanger (8) is connected to the point for drawing said secondary fluid, the hot primary fluid circulating inside said second exchanger (8) as a counter-current to the secondary fluid preheated in the condensing exchanger (1).

13. The device according to claim 12, **characterized by** the fact that the second exchanger (8) is an exchanger with plates.

14. A device for domestic production of a secondary fluid, such as hot sanitation water and of a primary fluid such as heating water, according to claim 12 or claim 13, **characterized by** the fact that it comprises a three-way valve (99), the first way of which is connected to the primary fluid outlet mouth (84) of the second exchanger (8) and the second way to the circulation means (9) themselves connected to the inlet (540) of the primary circuit of the condensing exchanger (1), and by the fact that it also comprises a T-shaped fitting (98), two branches of which are respectively connected to the primary fluid outlet (560) of the condensing exchanger (1) and to the inlet mouth (82) of the primary circuit of the second exchanger (8), the third way of the valve (99) and the third branch of the T-shaped fitting (98) being connectable to both ends (95, 97) of a heating water circulation network of, for example, central heating.
